# EUROPÄISCHE PATENTANMELDUNG

(11) **EP 3 173 205 A1**
(43) Veröffentlichungstag der Anmeldung: **31.05.2017**
(21) Anmeldenummer: 15196930.0
(22) Anmeldetag: 30.11.2015
(51) Int. Cl.: B29C 44/34, B29C 44/60, G01N 15/08

(54) **ÜBERWACHUNG UND/ODER DIAGNOSE VON SCHAUMSTOFFBILDUNGSPROZESSEN**

(71) Anmelder: Evonik Degussa GmbH, 45128 Essen (DE)
(72) Erfinder: KLOSTERMANN, Dr., Michael, 45239 Essen (DE); LANDGRAF, Andreas, 45143 Essen (DE); SCHILLER, Dr., Carsten, 40885 Ratingen (DE); EILBRACHT, Dr., Christian, 44627 Herne (DE); VENZMER, Dr., Joachim, 45239 Essen (DE)

(57) **Zusammenfassung**

Es wird ein Verfahren zur Überwachung und/oder Diagnose von Schaumstoffbildungsprozessen, vorzugsweise bei der Erzeugung von PUR-Schäumen, insbesondere PUR-Hartschaum, wobei der Schaumstoffbildungsprozess über einen vorgegebenen Messzeitraum videomikroskopisch erfasst wird, beschrieben.

## Beschreibung

Die Erfindung liegt auf dem Gebiet der Schaumstoffe und deren Herstellung, besonders der PUR-Schaumstoffe und deren Herstellung, insbesondere betrifft sie ein Verfahren zur Überwachung und/oder Diagnose von Schaumstoffbildungsprozessen, vor allem mit Blick auf PUR-Schäume.

Die Herstellung von polymeren Schaumstoffen erfolgt in der Regel durch Expansion eines physikalischen oder chemischen Treibmittels in einer Polymermatrix. Der Schäumprozess lässt sich hierbei grob in drei Schritte unterteilen, umfassend die Nukleierung des Treibmittels zu Zell-Keimen, das Wachstum der Keime zu tatsächlichen Schaumzellen sowie die Alterung der Schaumzellen. Unter Nukleierung versteht man im Allgemeinen das Freisetzen kleinster, feinstverteilter Gasbläschen im frischen Reaktionsgemisch.

Die vorgenannten Schritte müssen nicht zwangsweise sequenziell ablaufen, sondern können auch zumindest teilweise zeitgleich stattfinden. So ist vor allem das Wachstum der Schaumzellen oftmals mit einer zeitgleichen Zellalterung verbunden. Eigenschaften des gebildeten Schaums wie z.B. Zellgröße, Zellgrößenverteilung oder Zelldichte werden maßgeblich durch ein Zusammenspiel der oben genannten Schritte beeinflusst. So wird beispielsweise die Zelldichte des Schaums von der Anzahl der initialen Zell-Keime sowie der Alterung der hieraus gebildeten Schaumzellen bestimmt, während die Größe der Zellen in erster Linie von der Zellwachstumsrate sowie der Zellalterung abhängt. Eine gezielte Beeinflussung der oben genannten Phänomene kann daher die Entwicklung von Polymerschäumen mit definierten Zellgeometrien ermöglichen. Dieses Vorhaben scheitert jedoch in der Regel daran, dass eine adäquate Überwachung von Zell-Nukleierung, -Wachstum und -Alterung in vielen Fällen überhaupt nicht oder nur mit sehr großem experimentellen Aufwand möglich ist. Gründe hierfür sind u.a. die Längen- und Zeitskalen auf denen sich diese Prozesse abspielen, so handelt es sich oftmals um sehr schnelle Prozesse im mikro- und nanometer-Bereich. Im Falle von chemisch reaktiven Schaumsystemen, wie z.B. Polyurethan (PUR)-Schäumen, wird eine direkte Beobachtung zusätzlich durch die Reaktivität des Systems erschwert. Aus diesem Grund können Maßnahmen zur Beeinflussung des Schäumprozesses in der Regel nur indirekt anhand der Eigenschaften des finalen Schaums bewertet werden.

Aufgabe der vorliegenden Erfindung war daher die Bereitstellung einer einfachen, direkten Methode, welche die Beobachtung der während einer Polymerverschäumung auftretenden Prozesse ermöglicht.

Überraschender Weise wurde gefunden, dass diese Aufgabe durch die Verwendung von Videomikroskopie, insbesondere hochaufgelöster, digitaler Videomikroskopie gelöst werden kann.

Gegenstand der vorliegenden Erfindung ist Verfahren zur Überwachung und/oder Diagnose von Schaumstoffbildungsprozessen, vorzugsweise bei der Erzeugung von Polyurethanschaum (PUR-Schaum), insbesondere Polyurethanhartschaum (PUR-Hartschaum), wobei der Schaumstoffbildungsprozess über einen vorgegebenen Messzeitraum videomikroskopisch erfasst wird. Dieser Gegenstand ermöglicht die direkte Beobachtung der bei der Herstellung von Polymerschäumen auftretenden Prozesse, wie insbesondere Zell-Nukleierung, -Wachstum und -Alterung und bietet eine einfache, direkte Möglichkeit, eine Beobachtung der während einer Polymerverschäumung auftretenden Prozesse vorzunehmen.

"Überwachung" bedeutet im Sinne dieser Erfindung also im Wesentlichen das Beobachten und Erfassen von Schaumstoffbildungsprozessen bzw. von bei der Herstellung von Polymerschäumen, insbesondere von PUR-Schäumen, auftretenden Prozesse, wie insbesondere Zell-Nukleierung, -Wachstum und - Alterung.

"Diagnose" geht über die Überwachung hinaus und bedeutet im Sinne dieser Erfindung die durch die zusammenfassende Beurteilung des beobachten und erfassten Schaumstoffbildungsprozesses erzielbare Erkenntnis über die Abläufe des Schaumstoffbildungsprozess, insbesondere des Polyurethanschaum-Bildungsprozesses.

Die Herstellung von Polymerschäumen, wie vorzugsweise von Polyurethanschaum und insbesondere von Polyurethanhartschaum, ist an sich bekannt und wird in der einschlägigen Patentliteratur, auf die hier verwiesen sei, sehr umfangreich und detailliert beschrieben.

Durch die videomikroskopische Betrachtung von Schaumbildungsprozessen, insbesondere von Polyurethanschaumbildungsprozessen, über einen definierten kontinuierlichen Zeitraum ist es insbesondere möglich, die zeitliche Veränderungen von Zellstrukturen durch Zellwachstum- und Alterung zu beobachten, weshalb sich das erfindungsgemäße Verfahren bevorzugt zur Beobachtung dieser Phänomene eignet. Besonders bevorzugt ist hierbei die Verwendung des erfindungsgemäßen Verfahrens zur Beobachtung von Alterungsphänomenen im Rahmen von Schaumbildungsprozessen, insbesondere von Polyurethanschaumbildungsprozessen. Dies entspricht einer bevorzugten Ausführungsform der Erfindung.

Zellwachstum im Zusammenhang mit der vorliegenden Erfindung beschreibt insbesondere das Anschwellen von bereits vorhandenen Schaumzellen mit in der Schaumatrix gelöstem und/oder vorhandenem Treibmittel, wohingegen Zellalterung insbesondere eine Veränderung der Zellgröße und/oder Zellzahl durch Interaktion zweier oder mehrerer Zellen beschreibt.

Zellalterung kann hierbei zum einen durch direktes Verschmelzen zweier oder mehrerer Zellen erfolgen. Dies wird im Sinne dieser Erfindung als Zellverschmelzung bezeichnet. Dieses Phänomen wird auch Koaleszenz genannt.

Zum anderen kann Zellalterung durch sogenannte Ostwald-Reifung erfolgen. Ostwald-Reifung beruht hierbei auf der Tatsache, dass der Innendruck in kleinen Blasen aufgrund einer erhöhten Oberflächenkrümmung größer ist im Vergleich zu größeren Gasblasen. Verglichen zu größeren Gasblasen steigt hierdurch die Konzentration des in der Nähe von kleinen Gasblasen gelösten Zellgases, wodurch ein Konzentrationsgradient zwischen kleinen und großen Gasblasen entsteht. Dieser hat wiederum eine Zellgasdiffusion von kleinen in Richtung größeren Blasen zur Folge, wodurch kleinere Gasblasen langsam schrumpfen während größere Gasblasen anwachsen. Dieser Prozess läuft gewöhnlich so lange ab, bis die kleineren Gasblasen letztendlich verschwunden sind. Dieses Phänomen, also das Verschwinden von Zellen durch Ostwald-Reifung, wird im Sinne dieser Erfindung als Zelluntergang bezeichnet. Die Ausdrücke Gasblase, Blase, Schaumblase, Schaumzelle, Zelle werden im Sinne dieser Erfindung im Wesentlichen synonym verwendet.

Da sich Wachstums- und Alterungsphänomene durch verschiedene Mechanismen voneinander unterscheiden, ist es mit dem erfindungsgemäßen Verfahren durch Beobachtung der zeitlichen Veränderung eines Zellkollektives während des Schäumvorgangs über einen ausreichenden Zeitraum möglich, zwischen diesen Phänomenen zu unterscheiden und diese ggf. separat zu betrachten. Für eine genaue Betrachtung und Unterscheidung der einzelnen Phänomene ist vorzugsweise der Zeitraum für die Beobachtung des Schäumvorgangs ausreichend lang zu wählen. Der Begriff Zellkollektiv meint eine Gruppe von mehreren Zellen, die räumlich benachbart sind und videomikroskopisch im Sinne dieser Erfindung erfassbar sind. Das Zellkollektiv kann insbesondere eine Zellpopulation innerhalb eines bestimmten räumlichen Bereiches sein. Dieser Bereich kann entweder fix gewählt werden, also beispielsweise der komplette Bildausschnitt bzw. ein räumlich fixer Teil davon, oder er kann der räumlichen Bewegung und Expansionen der schäumenden Masse folgen, was im Sinne dieser Erfindung bevorzugt ist.

Erfindungsgemäß bevorzugt ist hierbei ein Beobachtungszeitraum von 1 - 600 Sekunden, vorzugsweise von 10 - 400 Sekunden, insbesondere von 50 - 300 Sekunden. Es entspricht daher einer bevorzugten Ausführungsform der Erfindung, wenn in dem erfindungsgemäßen Verfahren der Messzeitraum 1 - 600 Sekunden, vorzugsweise 10-400 Sekunden, insbesondere 50 bis 300 Sekunden beträgt.

Die zu untersuchenden Schaumbildungsprozesse spielen sich in der Regel auf Längenskalen im Bereich von 1 - 1000 µm ab. Daher entspricht es einer bevorzugten Ausführungsform der Erfindung bei dem erfindungsgemäßen Verfahren eine Vergrößerung im Bereich von vorzugsweise 5-5000-fach, besonders bevorzugt im Bereich von 10-2500-fach, insbesondere im Bereich von 20-1000-fach einzustellen.

Um eine vorteilhafte Statistik der Beobachtung zu erzielen ist es im Rahmen der vorliegenden Erfindung überdies bevorzugt, ein Zellkollektiv mit mindestens 20, bevorzugt mindestens 30, insbesondere bevorzugt mindestens 40 Zellen zu beobachten. Es entspricht daher einer bevorzugten Ausführungsform der Erfindung, wenn in dem erfindungsgemäßen Verfahren ein Ausschnitt der Schaumstoffbildung erfasst wird, umfassend ein Zellenkollektiv von wenigstens 20, vorzugsweise wenigstens 30, insbesondere wenigstens 40 einzelnen Zellen über den Messzeitraum, wobei die Zellenzahl des Zellkollektivs sich über den Messzeitraum verändern kann.

Um die zeitlichen Veränderungen einzelner Zellen verfolgen zu können ist es vorteilhaft, wenn die Bildwiederholrate der Videoaufnahme so hoch ist, dass die Veränderungen von Lage und Größe der Zellen von Einzelbild zu Einzelbild klein gegenüber dem Zelldurchmesser ist. Dadurch wird es möglich, Zellen eindeutig zu identifizieren und ihre Eigenschaften zu verschiedenen Zeiten des Schaumbildungsprozesses zu bestimmen. Hierin liegt ein großer Vorteil der erfindungsgemäßen Videomikroskopie-Methode im Vergleich mit der Aufnahme und Analyse einzelner mikroskopischer Fotos.

Es entspricht einer bevorzugten Ausführungsform der Erfindung, wenn mit dem erfindungsgemäßen Verfahren wenigstens eine Eigenschaft des Zellenkollektivs mit ihrer zeitlichen Veränderung erfasst wird. Weiterhin entspricht es einer bevorzugten Ausführungsform der Erfindung, wenn wenigstens eine Eigenschaft einer einzelnen Zelle des Zellenkollektivs mit ihrer zeitlichen Veränderung erfasst wird.

Die erfasste Eigenschaft kann insbesondere eine Zellform, ein Zellumfang, eine Zellfläche, eine Zellgröße, eine Anzahl von Zellen, ein Verhältnis von Größen von Zellen, ein Größenverhältnis von Zellen zu Bildausschnitt, die zeitliche Veränderung von Zellstrukturen durch Zellwachstum- und/oder Alterung, ein Verhältnis von Zelloberfläche zu Zellenzahl, ein Bewegungsmuster mit einer Bewegungsrichtung und einer Bewegungsgeschwindigkeit oder eine Anzahl von Zelluntergängen oder Zellverschmelzungen sein. Zellverschmelzungen werden im Sinne dieser Erfindung auf Koaleszenz zurückgeführt, Zelluntergänge werden im Sinne dieser Erfindung auf Ostwald-Reifung zurückgeführt.

Vorzugsweise kann die erfasste Eigenschaft ein Bewegungsmuster mit Ortsveränderungen sein, wobei Interaktionen zwischen Nachbarzellen erfasst werden, vorzugsweise unter Berücksichtigung von Zelluntergängen oder Zellverschmelzungen, wobei insbesondere das Verhältnis von Eigenbewegung wenigstens einer individualisierten Zelle zur Zellkollektivbewegung erfasst wird.

Insbesondere ist die erfasste Eigenschaft aber die zeitliche Veränderung von Zellstrukturen durch Zellwachstum- und/oder Alterung. Die Diagnose umfasst insbesondere die Unterscheidung der Phänomene der Koaleszenz und Ostwald-Reifung.

In einer bevorzugten Ausführungsform der Erfindung zeichnet sich das erfindungsgemäße Verfahren dadurch aus, dass die videomikroskopische Erkennung von Eigenschaften, wie zuvor definiert, anhand von Einzelbildern des Videosignals, insbesondere automatisch, geschieht, wobei zu jeder Einzelaufnahme des Videosignals eine oder mehrere der folgenden Schritte kumulativ ausgeführt werden:
a) Detektion der Zellgröße und insbesondere Berechnung des Flächeninhalts der Zelle, sowie insbesondere der Position der Zelle im erfassten Ausschnitt,
b) Detektion der Zellanzahl,
c) Detektieren von Zelluntergängen oder Zellverschmelzungen pro Zeiteinheit.

In einer weiteren bevorzugten Ausführungsform der Erfindung zeichnet sich das erfindungsgemäße Verfahren dadurch aus, dass eine erfasste Eigenschaft eine Zeit, eine Zeitspanne, eine Frequenz oder eine Häufigkeit ist, in der oder mit der sich eine erfasste Eigenschaft ändert.

In einer weiteren bevorzugten Ausführungsform der Erfindung zeichnet sich das erfindungsgemäße Verfahren dadurch aus, dass die videomikroskopischen Bilder mit digitaler Bildverarbeitung ausgewertet werden.

In einer bevorzugten Ausführungsform des erfindungsgemäßen Verfahrens wird die zeitliche Entwicklung der Größe einzelner Zellen oder der mittleren Zellgröße sowie der Zellgrößenverteilung eines Zellkollektivs erfasst. Die Zellgröße kann im Sinne dieser Erfindung z.B. über den Umfang der Zelle, den Durchmesser der Zelle oder den Flächeninhalt der Zelle bestimmt werden, letzteres ist besonders bevorzugt. Mittlere Zellgröße bezieht sich auf das arithmetische Mittel. Das arithmetische Mittel (auch Durchschnitt) ist ein Mittelwert, der als Quotient aus der Summe aller beobachteten Werte, also der Summe aller einzelnen beobachteten Zellgrößen, und der Anzahl der Werte, also der Anzahl der beobachteten Zellen, definiert ist.

Zur Erfassung des Zellwachstums wird hierfür die videomikroskopische Beobachtung des Schaumbildungsprozesses vorzugsweise in regelmäßigen zeitlichen Intervallen in Einzelbilder zerlegt. Durch Bildauswertung können aus diesen Einzelbildern zum jeweiligen Zeitpunkt Werte wie die Zellgröße einzelner Zellen, die mittlere Zellgröße eines Zellkollektivs oder die Zellgrößenverteilung extrahiert werden. Eine anschließende Auftragung dieser Werte in Abhängigkeit der Zeit sowie eine ggf. mathematische Modellierung des erhaltenen zeitlichen Größenverlaufs ermöglichen so quantitative Aussagen über das Zellwachstum.

Bei der Verfolgung der zeitlichen Veränderung einzelner Zellen ist vorzugsweise zu gewährleisten, dass die Auswertung in den Einzelbildern an stets denselben Zellen vorgenommen wird. Ist das Auswerteintervall so groß, dass die sichere Identifikation einzelner Zellen von Bild zu Bild nicht möglich ist, dann können zur Identifikation der Zellen die Video-Sequenzen zwischen den selektierten Einzelbildern herangezogen werden.

Bei der Beobachtung eines Zellkollektivs ist vorzugsweise zu gewährleisten, dass zu jedem Zeitpunkt stets das gleiche Zellkollektiv betrachtet wird. Das Zellkollektiv kann im Sinne dieser Erfindung insbesondere auf zweierlei Art definiert werden, entweder als Summe individueller Zellen, deren Identität wie oben beschrieben festgestellt wurde, oder als Zellpopulation innerhalb eines bestimmten räumlichen Bereiches. Dieser Bereich kann entweder fix gewählt werden, also beispielsweise der komplette Bildausschnitt bzw. ein räumlich fixer Teil davon, oder er kann der räumlichen Bewegung und Expansionen der schäumenden Masse folgen. Letzteres ist die bevorzugte Variante und kann beispielsweise durch ein schwimmendes Auswertefenster erreicht werden. Dazu werden Zellen identifiziert, die als Eckpunkte ein Polygon aufspannen. Alle Zellen innerhalb der Grenzen des Polygons werden zur Auswertung herangezogen. Die Identifikation der "Eck-Zellen" in den Einzelbildern kann wiederum mittels der zeitlich dazwischen liegenden Video-Sequenzen erfolgen. Bei stark expandierenden Schäumen kann es vorteilhaft sein, das schwimmende Auswertefenster in dem Einzelbild am Ende des Auswertezeitraumes festzulegen und dann Einzelbild für Einzelbild rückwärts in der Zeit die Eck-Zellen zu identifizieren. So kann vermieden werden, dass die Grenzen des Fensters aus dem Bildausschnitt herauswandern.

Weiterhin bevorzugt ist eine Ausführungsform des erfindungsgemäßen Verfahrens zur Erfassung der Zellalterung. Hierbei lässt sich die Zellalterung durch Verfolgung der zeitlichen Abnahme der Zellanzahl in einem definierten Bereich erfassen. Zur Ermittlung der zeitlichen Abnahme der Zellzahl wird hierfür die videomikroskopische Beobachtung des Schaumbildungsprozesses in regelmäßigen zeitlichen Intervallen in Einzelbilder zerlegt. Anschließend wird in jedem dieser Einzelbilder eine einheitliche Fläche definiert, in welcher die Zellalterung betrachtet wird. Um die Zellalterung unabhängig vom Zellwachstum zu betrachten, gilt es hierbei zu beachten, dass die Beobachtungs-fläche bei ggf. stattfindendem Zellwachstum zeitlich im selben Maße wie die darin befindlichen Zellen wächst. Dies lässt sich bevorzugt mittels des oben beschriebenen schwimmenden Auswertefensters realisieren. Die Zellanzahl in der Beobachtungsfläche zu den jeweiligen Zeitpunkten lässt sich nun durch einfaches abzählen der Zellen ermitteln. Eine anschließende Auftragung der Zellanzahl in Abhängigkeit der Zeit sowie eine ggf. mathematische Modellierung der erhaltenen zeitlichen Zellabnahme ermöglicht quantitative Aussagen über die Zellalterung. Parallel zu dieser Betrachtung lässt sich durch qualitative Beurteilung des videomikroskopisch festgehaltenen Schaumbildungsprozesses feststellen, ob Alterungsphänomene auf Koaleszenz (also Verschmelzen zweier oder mehrerer Zellen) oder Ostwald-Reifung (also Schrumpfen und Verschwinden kleiner Zellen) beruhen. Insbesondere insofern wird eine Diagnose des Schaumbildungsprozesses ermöglicht.

In Rahmen des erfindungsgemäßen Verfahrens können Schaumbildungsvorgänge insbesondere im Auflicht oder Durchlicht beobachtet werden.

In einer bevorzugten Ausführungsform des erfindungsgemäßen Verfahrens können Schaumbildungsvorgänge im Auflicht beobachtet werden. Der experimentelle Aufbau zur Durchführung des Verfahrens kann hierfür bereits mit sehr einfachen Mitteln ausgeführt werden. Insbesondere kann im Rahmen der Arbeitsvariante A) der zu untersuchende Schaum (bzw. das dazu führende Reaktionsgemisch) in eine Petrischale gefüllt werden, welche auf einem Stativ-Ring aufliegt. Unter diesem Stativring kann ein Digital-Objektiv angebracht werden, welches über eine eingebaute Lichtquelle verfügt und zur Aufzeichnung der Daten an einen Computer angeschlossen ist. Beleuchtung und Beobachtung erfolgen somit von der Schaumunterseite her ("Auflicht"). Die während des Schaumbildungsvorgangs ablaufenden Prozesse lassen sich an der Unterseite der Petrischale beobachten. Der Arbeitsabstand des Objektivs zur Petrischale ist hierbei so einzustellen, dass die Fokusebene des Objektivs am Boden der Petrischale liegt.

In einer anderen bevorzugten Ausführungsform des erfindungsgemäßen Verfahrens können Schaumbildungsvorgänge im Durchlicht beobachtet werden. Der experimentelle Aufbau zur Durchführung des Verfahrens kann hierfür ebenfalls mit sehr einfachen Mitteln ausgeführt werden. Insbesondere kann im Rahmen der Arbeitsvariante B) der zu untersuchende Schaum (bzw. das dazu führende Reaktionsgemisch) in eine Petrischale gefüllt werden, welche auf einem Stativ-Ring aufliegt. Über der den Schaum fassenden Petrischale wird eine Lichtquelle angebracht, welche ggf. mit einer Schutzummantelung versehen ist. Die Lichtquelle kann hierbei gewünschtenfalls in den Schaum eintauchen. Voraussetzung für dieses Vorgehen ist eine ausreichend hohe Lichtdurchlässigkeit des untersuchten Schaums. Die Detektion des Schaumbildungsvorgangs erfolgt wiederum an der Unterseite der Petrischale durch ein unter der Schale angebrachtes Digitalobjektiv, welches an eine Steuereinheit angeschlossen ist. Auch hier ist der Arbeitsabstand des Objektivs zur Petrischale insbesondere so einzustellen, dass der Boden der Petrischale in der Fokusebende des Objektivs liegt. Ein Vorteil dieser alternativen Ausführungsform ist, dass Schaumzellen durch einen gering gewählten Abstand zwischen Lichtquelle und Boden der Petrischale dem Beobachtungsfeld nicht oder nur schwer durch Auftrieb entweichen können.

Anstelle der Petrischale kann selbstverständlich jedes andere Gefäß, Kammer etc. gewählt werden, die eine videomikroskopische Beobachtung im Sinne dieser Erfindung zulässt. Insbesondere können jegliche Aufbauten und Anlagen im Sinne dieser Erfindung verwendet werden, die ein hinreichendes Beobachtungsfenster aufweisen, das eine videomikroskopische Beobachtung im Sinne dieser Erfindung zulässt.

Diese erfindungsgemäß bevorzugten Aufbauten lassen sich insbesondere mit einem VHX Digitalmikroskop der Firma Keyence, wie z.B. dem Modell VHX 2000 in Kombination mit Zoom-Objektiven der Reihe VH-Lens (beispielsweise VH-Z100T oder VH-Z250T) realisieren. Die videomikroskopische Aufzeichnung des Schaumbildungsvorgangs erfolgt in diesem Fall über die Kommunikationssoftware des Mikroskops. Die Nachbearbeitung und Auswertung der Aufnahmen des Schaumbildungsprozesses (insbesondere umfassend Zerlegung in Einzelbilder, Bildauswertungsbasierte Bestimmung von Zellanzahl, Zellgröße oder Zellgrößen-verteilung) können ebenfalls mit Hilfe der Kommunikationssoftware des Mikroskops durchgeführt werden. Alternativ kann die Bildauswertung von Einzelbildern des Schäumvorgangs mit einer Standardsoftware, wie z.B. ImageJ oder MatLab, durchgeführt werden. Auch eine händische Nachbearbeitung und/oder Auswertung von Einzelbildern ist möglich.

In einer bevorzugten Ausführungsform der vorliegenden Erfindung eignet sich das erfindungsgemäße Verfahren zur Erfassung des Schaumbildungsprozesses von Polyurethanschäumen. Insbesondere bevorzugt sind Polyurethan-Hartschäume. Bei Polyurethan-schäumen handelt es sich um Schaumstoffe, welche insbesondere durch Reaktion von Polyolen mit Polyisocyanaten in Gegenwart von chemischen (z.B. Wasser) und/oder physikalischen Treibmitteln (z.B. kurzkettige Alkane wie n-Pentan oder Cylcopentan) sowie in der Regel Schaumstabilisatoren und ggf. anderen Zusatzmitteln gebildet werden. Bedingt durch diese komplexe Rezeptur können bei der Herstellung von Polyurethanschäumen verschiedene Phasenzustände des Reaktionsgemisches auftreten. So sind in vielen Fälle Polyol und Polyisocyanat initial nicht kompatibel und bilden eine Emulsion; eine Mischbarkeit der beiden Komponenten stellt sich in solchen Fällen erst mit fortschreitender Reaktion ein. Bei der Verwendung von physikalischen Treibmitteln ist das Treibmittel zudem ebenfalls nicht zwangsläufig in den Reaktionskomponenten löslich und liegt womöglich auch in Form von Emulsionströpfchen in der Reaktionsmischung vor. Überraschender Weise wurde gefunden, dass sich im Falle von Polyurethanschäumen mit Hilfe des erfindungsgemäßen Verfahrens nicht nur die beschriebenen Zellbindungsprozesse sondern auch die Entwicklung der Phasenzustände der Reaktionsmischung erfassen lassen. Dies ist daher ebenfalls Gegenstand der vorliegenden Erfindung.

Ein weiterer Gegenstand der Erfindung ist eine Vorrichtung zur Überwachung und/oder Diagnose von Schaumstoffbildungsprozessen, vorzugsweise bei der Erzeugung von PUR-Schäumen, insbesondere PUR-Hartschaum, umfassend einen Raum für den Schaumbildungsprozess, wie z.B. die o.g. Petrischale, sowie eine Videomikroskopievorrichtung, die ausgebildet ist, um eine, insbesondere digitale, Videoaufnahme des Schaumstoffbildungsprozesses zu machen, wobei die Auflösung der Videomikroskopievorrichtung ausreicht, um einzelne Zellen im Laufe der Schaumbildung zu individualisieren, wobei die Vorrichtung vorzugsweise eine optionale Auswertevorrichtung umfasst, die ausgebildet ist, aus der Videoaufnahme wenigstens eine Zelle zu individualisieren, wenigstens eine Eigenschaft der individualisierten Zelle, insbesondere Zellgröße, oder des Zellkollektivs sowie deren zeitliche Änderung zu erfassen und ggf. mit einem Vergleichswert zu vergleichen.

Die erfindungsgemäße Vorrichtung ist insbesondere eingerichtet, ein Verfahren wie zuvor beschrieben durchzuführen.

Vorzugsweise ist die Vorrichtung so gestaltet, dass die optionale Auswertevorrichtung Zugriff auf eine Datenbank mit Vergleichswerten hat, in der Vergleichsdaten bezüglich der erfassten Eigenschaften der Zellen oder des Zellkollektivs im Rahmen von Schaumstoffbildungsprozessen hinterlegt sind.

Ein weiterer Gegenstand der Erfindung liegt in der Verwendung des erfindungsgemäßen Verfahrens oder der erfindungsgemäßen Vorrichtung, jeweils wie zuvor beschrieben, zur Erfassung der Zellzahlveränderung, insbesondere der Zellzahlreduktion, vorzugsweise pro Zeiteinheit, während eines Schaumstoffbildungsprozesses, bevorzugt bei der Erzeugung von PUR-Schäumen, insbesondere PUR-Hartschaum.

Ein weiterer Gegenstand der Erfindung liegt in der Verwendung des erfindungsgemäßen Verfahrens oder der erfindungsgemäßen Vorrichtung, jeweils wie zuvor beschrieben, zur Detektion von Zelluntergängen oder Zellverschmelzungen, vorzugsweise pro Zeiteinheit, während eines Schaumstoffbildungsprozesses, vorzugsweise bei der Erzeugung von PUR-Schäumen, insbesondere PUR-Hartschaum.

Ein weiterer Gegenstand der Erfindung liegt in der Verwendung des erfindungsgemäßen Verfahrens oder der erfindungsgemäßen Vorrichtung, jeweils wie zuvor beschrieben, zur Diagnose der Zellzahlveränderung, insbesondere der Zellzahlreduktion während eines Schaumstoffbildungsprozesses, vorzugsweise bei der Erzeugung von PUR-Schäumen, insbesondere PUR-Hartschaum, insbesondere zur Differenzierung zwischen Zelluntergängen durch Ostwald-Reifung und Zellverschmelzungen durch Koaleszenz.

Ein weiterer Gegenstand der Erfindung liegt in der Verwendung des erfindungsgemäßen Verfahrens oder der erfindungsgemäßen Vorrichtung, jeweils wie zuvor beschrieben, zur Ermittlung der Ostwald-Reifungsgeschwindigkeit eines Zellkollektivs während eines Schaumstoffbildungsprozesses, vorzugsweise bei der Erzeugung von PUR-Schäumen, insbesondere PUR-Hartschaum. Die Ostwald-Reifungsgeschwindigkeit eines Zellkollektivs ergibt sich aus dem Quotienten von Zelluntergängen pro Zeiteinheit, bezogen auf das Kollektiv.

Ein weiterer Gegenstand der Erfindung liegt in der Verwendung des erfindungsgemäßen Verfahrens oder der erfindungsgemäßen Vorrichtung, jeweils wie zuvor beschrieben, zur Detektion der zeitlichen Veränderung von Zellstrukturen durch Zellwachstum- und/oder Alterung.

### Beispiele

In den nachfolgend aufgeführten Beispielen wird die vorliegende Erfindung beispielhaft beschrieben.

### Beispiel 1: Beobachtung der Schaumbildung eines PU-Hartschaums

Zur Beobachtung der Schaumbildung eines PU-Hartschaums wurde ein Digitalmikroskop der Firma Keyence, Modell VHX 2000, ausgerüstet mit einem VH-Z20R/W-Zoom-Objektiv verwendet. Für den Versuch wurde die oben erwähnte Arbeitsvariante B, also eine Durchlicht-Methode gewählt. Hierfür wurde das Objektiv mit Blickrichtung nach oben in die Mikroskop-Einheit eingespannt und unterhalb einer auf einen Stativring aufliegenden Petri-Schale platziert. Als Belichtungsquelle diente ein Lichtleiter, welcher an das Lampenhaus der Mikroskopsteuereinheit angeschlossen wurde. Zum Schutz wurde hierbei das offene Ende des Lichtleiters mit einem Einweg-Schraubdeckelglas mit flachem Boden, ausgerüstet mit Deckel, in welchen eine passende Durchführung eingelassen ist und durch welche der Lichtleiter geführt wird, ummantelt. Die so konstruierte Belichtungsquelle wurde in einem Abstand von ca. 5 mm über dem Boden der Petri-Schale platziert, wobei die Beleuchtungsrichtung von oben nach unten zeigte. Hierbei wurde darauf geachtet, dass der Beleuchtungskegel möglichst genau im Betrachtungskegel des Objektivs lag. Für die Beobachtung des Schaumbildungsvorgangs wurde eine 100-fache Vergrößerung gewählt. Der Fokus des Objektivs wurde so eingestellt, dass er am Boden der Petrischale lag.

Bei dem zu beobachteten Schaumsystem handelte es sich um einen Cyclopentan-getriebenen PU-Hartschaum, welcher durch Reaktion von 100 Gewichtsteilen eines Polyolgemisches, enthaltend ein aliphatisches Polyetherpolyol (Glycerin/Sorbit-gestartet) mit einer OH-Zahl von 470 mg KOH / g, mit 160 Gewichtsteilen handelsüblichem polymerem Diphenylmethandiisocyanat (pMDI mit einer Viskosität von 200 mPas) hergestellt wurde. Das Polyolgemisch enthielt hierbei - bezogen auf 100 Gewichtsteile des Basispolyols - zusätzlich 2,5 Gewichtsteile Wasser, 1,0 Gewichtsteile des Härtungskatalysators Dimethylcyclohexylamin, 1,5 Gewichtsteile des Polyethersiloxan-basierten Schaumstabilisators Tegostab B 8461 der Firma Evonik Industries AG sowie 13,0 Gewichtsteile Cyclopentan. Polyolgemisch und MDI wurden für 10 sec. mit Hilfe einer Dispergierscheibe homogenisiert. Zur Beobachtung wurden direkt im Anschluss 5g der so hergestellten Reaktionsmischung in die Petrischale des Mikroskopie-Aufbaus gefüllt und die einsetzende Schaumbildung für 5 min videomikroskopisch nachverfolgt. Ggf. musste direkt nach dem Einfüllen Reaktionsmischung in die Petrischale der Fokus des Objektivs sowie die Beleuchtungsstärke des Lichtleiters angepasst werden. Bei der anschließenden Betrachtung der videomikroskopischen Aufnahme konnten das Wachstum der Schaumblasen sehr gut beobachtet werden.

### Beispiel 2: Beobachtung der Phasenzustände im Reaktionsgemisch bei der Herstellung eines PU-Hartschaums

Die bei der PU-Hartschaum-Herstellung auftretenden Phasenzustände wurden mit Hilfe des in Beispiel 1 beschriebenen Versuchsaufbaus untersucht, diesmal jedoch unter Verwendung des Zoom-Objektivs VH-Z100T bei einer 500-fachen Vergrößerung. Zur Schaumherstellung wurde wiederum die in Beispiel 1 beschriebene Reaktionsmischung verwendet. Nach Homogenisierung wurde diese in die Petrischale des Mikroskopie-Aufbaus gefüllt und die einsetzende Schaumbildung für 5 min videomikroskopisch nachverfolgt. Bei der anschließenden Auswertung der videomikroskopischen Aufnahme war deutlich zu erkennen, dass die Reaktionsmischung zu Beginn der Reaktion eine Emulsionsstruktur aufwies und aus µm großen Tröpfchen dispergiert in einer homogenen kontinuierlichen Phasen bestand. Die Blasen des sich bildenden Schaums wuchsen hierbei in der kontinuierlichen Phase der Reaktionsmischung. Mit fortschreitender Zeit war jedoch zu beobachten, dass die Tröpfchenstruktur immer undeutlicher wurde und sich Tröpfchen und kontinuierliche Phase immer stärker vermischten bis schließlich nur noch eine homogene Phase vorlag.

### Beispiel 3: Beobachtung von Schaumalterung durch Koaleszenz

Zur Beobachtung von Koaleszenz-Phänomenen wurden wieder der in Beispiel 1 beschriebene Versuchsaufbau sowie das dort beschriebene Reaktionssystem verwendet. Allerdings wurde in diesem Fall auf den Polyethersiloxan-basierten Schaumstabilisator Tegostab B 8461 verzichtet. Nach Homogenisierung wurde das Reaktionssystem in die Petrischale des Mikroskopie-Aufbaus gefüllt und die einsetzende Schaumbildung für 5 min bei 100-facher Vergrößerung videomikroskopisch nachverfolgt. Bei der anschließenden Betrachtung der videomikroskopischen Aufnahmen konnte auch in diesem Fall das Wachstum der Schaumblasen sehr gut beobachtet werden. Anders als in Beispiel 1 war in diesem Fall jedoch zusätzlich eine stark ausgeprägte Neigung der Schaumblasen zur Koalesenz zu beobachten. So war während des Schaumbildungsvorgangs immer wieder ein rasches verschmelzen zweier oder mehrerer Schaumblasen erkennbar, wodurch die gebildeten Schaumblasen während der Schaumbildung größtenteils verloren gingen.

### Beispiel 4: Beobachtung von Schaumalterung durch Ostwald-Reifung

Für die Betrachtung von Ostwald-Reifung wurden wieder der in Bespiel 1 beschriebene experimentelle Aufbau sowie das dort beschriebene Reaktionssystem verwendet. Die Vermischung der Reaktionskomponenten erfolgt diesmal jedoch im Mischkopf einer Hochdruck-Schäum-Maschine der Firma Krauss-Maffei (RIM-Star MiniDos mit MK12/18ULP-2KVV-G-80-I Mischkopf) bei 150 bar. Direkt nach Austritt aus dem Mischkopf wurden wieder ca. 5 g der Reaktionsmischung in die Petri-Schale des Mikroskopie-Aufbaus gefüllt und für 3 Minuten bei 100-facher Vergrößerung videomikroskopisch nachverfolgt. Bei der anschließenden Betrachtung der videomikroskopischen Aufnahmen war zunächst zu beobachten, dass die initiale Blasendichte zu Beginn des Verschäumvorgangs deutlich höher war als im Falle der in Beispiel 1 beschriebenen Handverschäumung. Zusätzlich konnte im Verlauf der Verschäumung eine deutlich stärkere Alterung der Schaumblasen durch Ostwald-Reifung, also dem langsamen Auflösen kleiner Schaumblasen, beobachtet werden. Alterungsphänomene durch Koaleszenz konnten hingegen kaum erkannt werden.

Zur weiteren Betrachtung von Ostwald-Reifung im Verlauf des Schäumprozesses wurde in einem nächsten Schritt das aufgenommen Video im Beobachtungszeitraum von 20 - 160 sec. in 15 Einzelbilder zerlegt. Die Zeit zwischen den Einzelbildern betrug in allen Fällen 10 sec. In einem nächsten Schritt wurden ausgehend vom letzten Einzelbild nach 160 sec. vier Zellen identifiziert, welche sich möglichst in den vier Ecken des Bildes befanden und während der Verschäumung nicht alterten und somit auf allen Einzelbildern sichtbar waren. Um diese Zellen wurde anschließend in allen Einzelbildern ein Rechteck gespannt, welches das Beobachtungsfenster zum jeweiligen Zeitpunkt darstellt. Durch dieses Vorgehen wurde sichergestellt, dass das Beobachtungsfenster mit etwa der gleichen Rate wächst, wie auch der zu untersuchende PU-Schaum, wodurch Ostwald-Reifung entkoppelt vom Wachstum des Schaums untersucht werden konnte. In einem nächsten Schritt wurden zu jedem Zeitpunkt die Schaumzellen im Beobachtungsfenster gezählt und anschließend semi-logarithmisch als Funktion der Zeit aufgetragen. Das folgende Diagramm zeigt das erhaltene Resultat. Wie zu erkennen ist, nimmt die Blasenanzahl mit zunehmende Reaktionszeit stetig ab. Da aus der qualitativen Betrachtung der videomikroskopischen Aufnahme erkennbar war, dass Koaleszenz vernachlässigbar war, und da durch die Wahl eines wachsenden Beobachtungsfensters Alterung entkoppelt von Zellwachstum betrachtet wurde, entspricht die beobachtete Abnahme der Blasenanzahl in etwa dem Verlust an Schaumblasen durch Ostwald-Reifung. Folglich gingen im beobachteten Zeitfenster ca. 2/3 aller Schaumblasen durch Ostwald-Reifung verloren. Durch mathematische Modellierung ist aus den aufgetragenen Daten zudem die Rate des Reifungsprozesses bestimmbar.

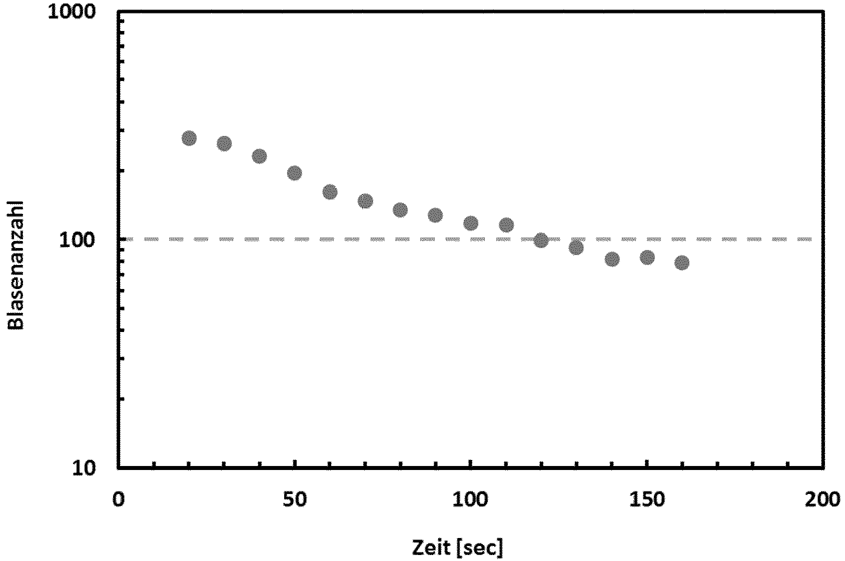

**Diagramm:** Abnahme der Blasenanzahl durch Ostwald-Reifung in einem PU-Hartschaum.

### Beispiel 5: Beobachtung der Schaumbildung eines PU-Weichschaums

Zur Beobachtung der Schaumbildung eines PU-Weichschaums wurde ein Digitalmikroskop der Firma Keyence, Modell VHX 2000, ausgerüstet mit einem VH-Z20R/W-Zoom-Objektiv verwendet. Aufgrund der zu erwartenden hohen Steighöhe des Schaums wurde anders als in Beispiel 1 für diesen Versuch die oben erwähnte Arbeitsvariante A, Auflichtmethode-Methode, gewählt. Hierfür wurde das Objektiv mit Blickrichtung nach oben in die Mikroskop-Einheit eingespannt und unterhalb einer auf einen Stativring aufliegenden Petri-Schale platziert. Zum Schutz des Mikroskops vor dem stark aufsteigenden Schaum wurde die Petrischale zusätzlich mit einem ca. 20 cm hohen Plastik-Zylinder ummantelt. Zur Beleuchtung wurde der Lichtleiter des Mikroskops direkt an das Objektiv angeschlossen. Für die Beobachtung des Schaumbildungsvorgangs wurde eine 100-fache Vergrößerung gewählt. Der Fokus des Objektivs wurde so eingestellt, dass er am Boden der Petrischale lag.

Bei dem zu beobachteten Schaumsystem handelte es sich um einen Wasser-getriebenen PU-Weichschaum, welcher durch Reaktion von 100 Gewichtsteilen eines Glycerin-basierten Polyetherpolyols, OH-Zahl von 48 mg KOH/g, und 50,6 Gewichtsteilen Toluylendiisocyanat (TDI T 80), 48% NCO, Funktionalität 2, hergestellt wurde. Das Polyol wurde vor der Mischung mit dem Isocyanat zusätzlich mit 0,20 Gewichtsteile des Zinn-Katalysators KOSMOS 29® der Firma Evonik Industries AG, 4,00 Gewichtsteilen Wasser, 0,20 Teilen des Amin-basierten Härtungskatalysators TEGOAMIN® DMEA der Firma Evonik Industries sowie 1,00 Gewichtsteilen des Polyethersiloxan-basierten Schaumstabilisators TEGOSTAB® BF 2370 der Firma Evonik Industries AG versetzt und mit Hilfe einer Dispergierscheibe 60 sec. Bei 1000 U/min homogenisiert. Für die Verschäumung wurde nach Zugabe des Toluylendiisocyanats zur Polyolphase weitere 7 s bei 2500 U/min homogenisiert. Zur Beobachtung wurden direkt im Anschluss 5g der so hergestellten Reaktionsmischung in die Petrischale des Mikroskopie-Aufbaus gefüllt und die einsetzende Schaumbildung für 5 min Videomikroskopisch nachverfolgt. Ggf. musste direkt nach dem Einfüllen der Reaktionsmischung in die Petrischale der Fokus des Objektivs sowie die Beleuchtungsstärke angepasst werden. Auch hier konnten bei der anschließenden Auswertung der videomikroskopischen Aufnahme Wachstum und Alterung der Schaumblasen sehr klar beobachtet werden.

## Patentansprüche

1. Verfahren zur Überwachung und/oder Diagnose von Schaumstoffbildungsprozessen, vorzugsweise bei der Erzeugung von PUR-Schäumen, insbesondere PUR-Hartschaum, **dadurch gekennzeichnet, dass** der Schaumstoffbildungsprozess über einen vorgegebenen Messzeitraum videomikroskopisch erfasst wird.

2. Verfahren nach Anspruch 1, **dadurch gekennzeichnet, dass** der Messzeitraum 1 - 600 Sekunden, vorzugsweise 10-400 Sekunden, insbesondere 50 bis 300 Sekunden beträgt.

3. Verfahren nach Anspruch 1 oder 2, **dadurch gekennzeichnet, dass** ein Ausschnitt der Schaumstoffbildung erfasst wird, umfassend ein Zellenkollektiv von wenigstens 20, vorzugsweise wenigstens 30, insbesondere wenigstens 40 einzelnen Zellen über den Messzeitraum, wobei die Zellenzahl des Zellkollektivs sich über den Messzeitraum verändern kann.

4. Verfahren nach einem der Ansprüche 1 bis 3, **dadurch gekennzeichnet, dass** wenigstens eine Eigenschaft des Zellenkollektivs mit ihrer zeitlichen Veränderung und/oder wenigstens eine Eigenschaft einer einzelnen Zelle des Zellenkollektivs mit ihrer zeitlichen Veränderung erfasst wird.

5. Verfahren nach Anspruch 4, **dadurch gekennzeichnet, dass** die erfasste Eigenschaft eine Zellform, ein Zellumfang, eine Zellfläche, eine Zellgröße, eine Anzahl von Zellen, ein Verhältnis von Größen von Zellen, ein Größenverhältnis von Zellen zu Bildausschnitt, ein Verhältnis von Zelloberfläche zu Zellenzahl, die zeitliche Veränderung von Zellstrukturen durch Zellwachstum- und/oder Alterung, ein Bewegungsmuster mit einer Bewegungsrichtung und einer Bewegungsgeschwindigkeit oder eine Anzahl von Zelluntergängen oder Zellverschmelzungen ist.

6. Verfahren nach einem der Ansprüche 4 oder 5, **dadurch gekennzeichnet, dass** die videomikroskopische Erkennung von Eigenschaften anhand von Einzelbildern des Videosignals, insbesondere automatisch, geschieht, wobei zu jeder Einzelaufnahme des Videosignals eine oder mehrere der folgenden Schritte kumulativ ausgeführt werden:
a) Detektion der Zellgröße und insbesondere Berechnung des Flächeninhalts der Zelle, sowie insbesondere der Position der Zelle im erfassten Ausschnitt,
b) Detektion der Zellanzahl,
c) Detektieren von Zelluntergängen oder Zellverschmelzungen pro Zeiteinheit.

7. Verfahren nach einem der Ansprüche 4 bis 6, **dadurch gekennzeichnet, dass** eine erfasste Eigenschaft eine Zeit, eine Zeitspanne, eine Frequenz oder eine Häufigkeit ist, in der oder mit der sich eine erfasste Eigenschaft ändert.

8. Verfahren nach einem der vorigen Ansprüche, **dadurch gekennzeichnet, dass** die videomikroskopischen Bilder mit digitaler Bildverarbeitung ausgewertet werden.

9. Vorrichtung zur Überwachung und/oder Diagnose von Schaumstoffbildungsprozessen, vorzugsweise bei der Erzeugung von PUR-Schäumen, insbesondere PUR-Hartschaum, umfassend einen Raum für den Schaumbildungsprozess sowie eine Videomikroskopievorrichtung, die ausgebildet ist, um eine, insbesondere digitale, Videoaufnahme des Schaumstoffbildungsprozesses zu machen, wobei die Auflösung der Videomikroskopievorrichtung ausreicht, um einzelne Zellen im Laufe der Schaumbildung zu individualisieren, wobei die Vorrichtung vorzugsweise eine optionale Auswertevorrichtung umfasst, die ausgebildet ist, aus der Videoaufnahme wenigstens eine Zelle zu individualisieren, wenigstens eine Eigenschaft der individualisierten Zelle, insbesondere Zellgröße, oder des Zellkollektivs sowie deren zeitliche Änderung zu erfassen und ggf. mit einem Vergleichswert zu vergleichen.

10. Vorrichtung nach Anspruch 9, **dadurch gekennzeichnet, dass** sie eingerichtet ist, ein Verfahren nach einem der Ansprüche 1 bis 8 durchzuführen.

11. Verwendung des Verfahrens oder der Vorrichtung, jeweils nach einem der vorigen Ansprüche zur Erfassung der Zellzahlveränderung, insbesondere der Zellzahlreduktion, vorzugsweise pro Zeiteinheit, während eines Schaumstoffbildungsprozesses, bevorzugt bei der Erzeugung von PUR-Schäumen, insbesondere PUR-Hartschaum.

12. Verwendung des Verfahrens oder der Vorrichtung, jeweils nach einem der vorigen Ansprüche zur Detektion von Zelluntergängen oder Zellverschmelzungen, vorzugsweise pro Zeiteinheit, während eines Schaumstoffbildungsprozesses, vorzugsweise bei der Erzeugung von PUR-Schäumen, insbesondere PUR-Hartschaum.

13. Verwendung des Verfahrens oder der Vorrichtung, jeweils nach einem der vorigen Ansprüche zur Diagnose der Zellzahlveränderung, insbesondere der Zellzahlreduktion während eines Schaumstoffbildungsprozesses, vorzugsweise bei der Erzeugung von PUR-Schäumen, insbesondere PUR-Hartschaum, insbesondere zur Differenzierung zwischen Zelluntergängen durch Ostwald-Reifung und Zellverschmelzungen durch Koaleszenz.

14. Verwendung des Verfahrens oder der Vorrichtung, jeweils nach einem der vorigen Ansprüche, zur Ermittlung der Ostwald-Reifungsgeschwindigkeit eines Zellkollektivs während eines Schaumstoffbildungsprozesses, vorzugsweise bei der Erzeugung von PUR-Schäumen, insbesondere PUR-Hartschaum.

15. Verwendung des Verfahrens oder der Vorrichtung, jeweils nach einem der vorigen Ansprüche, zur Detektion der zeitlichen Veränderung von Zellstrukturen durch Zellwachstum- und/oder Alterung.
